# FASCICULE DE BREVET EUROPEEN

(11) **EP 3 371 277 B1**
(45) Date de publication et mention de la délivrance du brevet: **10.07.2019**
(21) Numéro de dépôt: 16826087.5
(22) Date de dépôt: 04.11.2016
(51) Int. Cl.: C01B 3/02, C10K 1/02, C10J 3/66, C10K 1/04

(54) **PROCÉDÉ DE PRODUCTION DE GAZ SYNTHETIQUE**
VERFAHREN FÜR HERSTELLUNG VON SYNTHETISCHEN GAS
PROCESS FOR THE PRODUCTION OF SYNTHETIC GAS

(30) Priorité: 04.11.2015 FR 1560557
(43) Date de publication de la demande: 12.09.2018
(73) Titulaire: Haffner Energy, 51300 Vitry Le Francois (FR)
(72) Inventeur: HAFFNER, Philippe, 51300 Vitry Le Francois (FR); FERNANDEZ DE GRADO, Alain, 51300 Les Rivieres Henruel (FR)
(74) Mandataire: Oudin, Stéphane
(86) Numéro de dépôt international: PCT/FR2016/052866
(87) Numéro de publication internationale: WO 2017/077253

(56) Documents cités:
- EP-A1- 2 589 646
- DE-C1- 4 342 165
- HEIJ J L: "PYROLYSE EN VERGASSEN", KUNSTSTOF EN RUBBER, WYT EN ZONEN UITGEVERS. ROTTERDAM, NL, no. 1, 1 janvier 1993 (1993-01-01), pages 19-21, XP000355902, ISSN: 0167-9597

## Description

### Domaine de l'invention

La présente invention concerne le domaine de la production de gaz par thermolyse de matière organique utilisée sous une forme solide ou liquide, cette matière pouvant être constituée de biomasse d'origine majoritairement végétale ou animale ou fossile comme par exemple des plastiques ou d'autres produits composés d'hydrocarbures.

L'invention concerne notamment un procédé de production de gaz et l'installation de production de gaz à partir de matière organique utilisant ledit procédé.

### Etat de la technique

La gazéification de la matière organique est l'une des voies possibles pour sa valorisation énergétique, les autres voies étant la combustion et la méthanisation. DE 43 42 165 C1 divulgue un procédé de production d'un gaz de synthèse, comportant une première étape de thermolyse de ladite matière organique et une seconde étape séparée de gazéification de la matière organique thermolysée.

La matière organique est toujours constituée majoritairement de molécules composées de Carbone C, d'Hydrogène H et d'Oxygène O, éventuellement combinée à de l'eau H2O. Si cette matière organique est soumise à une température de plus de 150°C en absence d'oxygène, elle subit alors une transformation dite de pyrolyse qui casse les molécules carbonées par rupture des liaisons covalentes. Les produits obtenus lors de cette pyrolyse sont des solides (cendres minérales plus carbone résiduel appelé Char), des vapeurs qui se condensent à température et pression ambiante (goudrons, huiles) et des gaz de synthèse, dit syngaz, qui restent à l'état gazeux à température et pression ambiante (Monoxyde de carbone, Dihydrogène et des éléments gazeux peu valorisables économiquement, comme le Dioxyde de carbone).

Le char produit par la pyrolyse subit aussi une gazéification par association de carbone avec de l'oxygène et de l'hydrogène qui produit du Monoxyde de carbone, du Dihydrogène et du Méthane dans des conditions idéales. Cette réaction est endothermique et exige un apport de chaleur spécifique. Traditionnellement, cet apport est assuré par une réaction de combustion à l'air réalisée dans le procédé.

Idéalement les produits du procédé devraient être uniquement du Monoxyde de carbone, du Dihydrogène et du Méthane. Dans la réalité, en fonction de l'origine de la matière première, de sa pureté et des conditions de réaction (pression, température, vitesse,...), des éléments obtenus par recombinaison chimique avec certains éléments, et notamment le chlore, le soufre, l'azote, etc. apparaissent et sont des éléments indésirables pour leurs effets de corrosion, abrasion et encrassement des équipements. De plus, d'autres éléments comme les dioxines et les furanes peuvent être produits durant les réactions, représentant un risque élevé pour la santé des populations environnantes.

Selon l'état de l'art actuel des procédés de gazéification de matière organique, la production de Syngaz fait appel à principalement trois technologies:
- Dans un procédé de type co-courant ou contre-courant à pyrolyse dite lente, la matière première est introduite dans une enceinte dans laquelle elle subit les étapes de pyrolyse et de gazéification au cours de son déplacement. De l'air ou de l'oxygène est introduit localement dans l'enceinte afin de permettre une combustion partielle du char et de générer l'énergie nécessaire à la gazéification endothermique, notamment du fait de la présence concomitante d'eau. Les gaz produits sont extraits soit du côté de l'entrée de la matière première (logique de contre-courant) soit du côté de la sortie des cendres (logique de co-courant).
- Dans un procédé de type lit fluidisé à pyrolyse dite rapide, la matière première est préalablement broyée et calibrée puis introduite dans un réacteur où s'agite une masse de particules à plus de 500°C, par exemple du sable ou de l'olivine ou de la dolomite. La matière première attaquée par un front de gazéification rapide subit alors en quelques fractions de secondes les étapes de pyrolyse et gazéification. Les gaz produits sont collectés en une seule sortie principale placée en position haute. L'étape suivante effectue, dans la majorité des cas, une séparation centrifuge des gaz produits d'avec le sable. Celui-ci est alors recirculé vers le réacteur afin d'être réutilisé, entraînant avec lui la plupart des particules de char non gazéifiées.
- Dans un procédé de type tambour tournant, la matière première est introduite dans un tambour rotatif dont l'enceinte est chauffée sur l'enveloppe extérieure. Les gaz produits sont évacués à l'autre extrémité. La progression de la matière est assurée par le mouvement de rotation libre dans le tambour. Les gaz produits sont collectés en une seule sortie principale.

Ces solutions traditionnelles présentent notamment les défauts suivants:
- Les syngaz produits par ces différents procédés sont réputés être peu énergétiques avec un pouvoir calorifique inférieur PCI souvent inférieur à 5MJ/Nm3.
- Les réactions de pyrolyse et gazéification qui ont lieu dans une même enceinte ne permettent pas de maîtriser précisément les températures et les compositions chimiques des réactifs en présence dans les différentes zones du réacteur. La composition du gaz final s'en ressent défavorablement, notamment par la présence éventuelle de goudrons, d'oxydes d'azote, de dioxines, ... .
- Dans le cas de la pyrolyse rapide par fluidisation qui procède instantanément aux deux opérations de pyrolyse et gazéification, le gaz produit est de bien meilleure qualité. Toutefois l'installation est complexe, coûteuse, énergivore car il faut assurer la fluidisation d'éléments sableux lourds et la circulation du sable est sujette aux bouchages ce qui réduit le taux de disponibilité de l'équipement. De surcroît, il n'est pas possible d'exploiter l'enthalpie des gaz produits, dont la température est généralement supérieure à 800°C, afin d'alimenter le procédé en amont, et cette enthalpie est donc perdue pour le procédé, impliquant une perte de rendement qui peut dépasser 20%.

- D'autre part, l'évacuation des cendres de la gazéification est complexe car certaines matières premières présentent une température de fusion des cendres assez basse (850°C par exemple pour de la rafle de maïs) ce qui implique que, si la ressource en matière première change de nature, les cendres sont alors parfois solides, parfois visqueuses, parfois liquides. La solution actuelle est de restreindre très fortement l'exploitation de matières premières à cendres à température de fusion en deçà de la température intérieure des parois du réacteur de gazéification, ce qui limite les opportunités de fourniture de certaines matières premières compétitives et dotées d'un pouvoir calorifique élevé. Cela concerne par exemple la plupart des déchets agricoles tels que les rafles de maïs.
- La nécessité d'éliminer les goudrons pour une exploitation du syngaz dans un moteur, par exemple, impose de chauffer le syngaz à une température proche ou supérieure à 1000°C, et les procédés conventionnels ne permettent pas la récupération de l'énergie thermique transmise au syngaz pour le procédé de gazéification. Cette récupération n'est généralement possible et effective que pour l'alimentation d'un procédé alternatif du type cycle de Rankine alimentant une turbine à vapeur.
- L'utilisation d'air prélevé à l'atmosphère afin d'assurer l'apport de comburant lors d'une étape de combustion intégrée dans un procédé conventionnel cause la production de syngaz pauvre (le plus souvent moins de 5 MJ/Nm3) avec un taux d'azote dépassant 40%.

Les procédés traditionnels de pyrolyse et/ou gazéification à base de lit fixe ou lit fluidisé présentent l'inconvénient majeur de produire des gaz mélangés qu'il n'est pas possible de valoriser séparément. Les gaz issus de la pyrolyse ont une composition distincte de celle des gaz issus de la gazéification proprement dite. Cependant, les deux étapes étant réalisées de manière simultanée dans ces procédés traditionnels, il est impossible de dissocier lesdits gaz ce qui présente de nombreux inconvénients, comme cela est décrit infra.

La pyrolyse a pour fonction d'assurer la rupture des liaisons covalentes des chaînes carbonées sous l'effet d'une température élevée (typiquement 300 à 800°C) en absence d'oxygène extérieur (ou en fort défaut par rapport aux proportions stoechiométriques théoriques).

La gazéification a pour fonction d'assurer la production de CO à partir du carbone fixe extrait du char obtenu après pyrolyse totale, avec l'apport d'un agent oxydant ou gazéifiant tel de l'H2O ou du CO2 et de la chaleur.

Ce ne sont donc pas les mêmes réactions thermochimiques qui s'opèrent ; d'ailleurs la première réaction est faiblement endothermique alors que la seconde est au contraire fortement endothermique.

Dans un lit fixe à co-courant, la matière en cours de transformation et les gaz produits descendent ensemble ce qui fait que les gaz de pyrolyse et de gazéification sont mélangés et qu'ils sortent tous en bas sans qu'il soit possible de les dissocier. Il y a avantageusement un phénomène de craquage des goudrons présents mais les deux productions de gaz (pyrolyse et gazéification) sont craquées ensemble, ce qui représente un volume important de gaz à traiter et la température finale après craquage reste très élevée (typiquement entre 600 et 1000°C). Ainsi dans ce type de procédé la valorisation de l'énergie que représente la chaleur sensible des gaz produits ne peut aisément se faire par recirculation interne dans le même procédé, par exemple pour permettre les réactions endothermiques. En effet les grandes températures en jeu compliquent le choix de solutions techniques (aciers réfractaires coûteux, ...).

Dans un lit fixe à contrecourant, les gaz de pyrolyse et de gazéification sortent mélangés par le haut alors que la matière descend. Cet écoulement à contrecourant permet de sortir les gaz refroidis par leur passage à travers la matière première descendante et donc de réchauffer cette matière descendante, ce qui est favorable à la recirculation interne de l'énergie des gaz produits. Mais par le fait de cette recirculation, une partie de la matière traversée est alors pyrolysée à une température très inférieure à celle requise pour le craquage des goudrons. Ainsi de nombreux goudrons primaires, secondaires et tertiaires demeurent, au détriment de la valorisation ultérieure du gaz produit.

Dans un lit fluidisé circulant et bouillonnant, tous les gaz sont produits de façon quasiment simultanée dans la même enceinte (selon le procédé de pyrolyse flash) et sont donc mélangés. La chaleur atteinte est élevée (environ 900°C) et homogène par le fait des fortes agitations gazeuses présentes, ce qui limite la production de goudrons. Toutefois l'ensemble des gaz produits sort à très haute température qu'il n'est encore une fois pas aisé de recycler en interne pour l'alimentation du procédé.

Dans un lit entrainé, les éléments pulvérulents à pyrolyser et gazéifier sont injectés en partie supérieure du réacteur en mélange avec l'oxygène et la vapeur d'eau requises pour alimenter la réaction de gazéification, qui se fait alors à une température généralement supérieure à 1200°C. De la même manière que pour les lits fluidisés, le recyclage de l'enthalpie des gaz produits est très complexe à mettre en oeuvre.

En outre, les solutions traditionnelles sont sujettes à une corrosion rapide des équipements, y compris à des températures supérieures à la température de condensation possible d'acides. Cette corrosion chaude apparait par exemple au-delà d'une température de 50°C où de l'acide chlorhydrique provoque une corrosion très rapide des matériaux.

Ceci limite considérablement le recours à certains entrants, mais aussi réduit les plages d'utilisation des échangeurs thermiques haute température et leur pincement thermique est souvent très élevé. Ainsi des entrants fortement halogénés (déchets chargés en PVC, certains déchets agricoles, effluents d'élevages, ...) sont à ce jour proscrits dans les procédés traditionnels de gazéification du fait d'un taux de chlore trop élevé. L'exploitation énergétique de ces entrants est actuellement réservée à d'autres filières énergétiques ayant une efficacité énergétique généralement moins élevée que la gazéification, par exemple l'incinération ou la méthanisation.

De plus un risque de dépôts encrassant sur les parois des équipements traditionnels peut aussi apparaitre avec certaines matières premières contenant beaucoup de composants alcalins (K, Na,...) et conduire à un encrassement des équipements, à une baisse rapide de la performance des échanges thermiques, ou bien même à un arrêt de équipements. Les matières perturbatrices sont par exemple les feuilles d'arbres, la rafle de maïs, la paille de blé, et la plupart des pailles issues de céréales. Dans la majorité des cas, c'est la présence d'alcalins (K et Na) se comportant comme des fondants au-delà de températures de 600°C qui provoquent l'accumulation de mâchefers et l'encrassement consécutif des échangeurs à haute température.

Enfin les solutions traditionnelles compensent leurs difficultés à recycler l'énergie de chaleur sensible présente dans les gaz produits (risques de corrosion, d'encrassement dans les échangeurs thermiques à très haute température,...) en consommant justement une part importante desdits gaz afin d'apporter par combustion l'énergie nécessaire à l'entretien des réactions endothermiques du procédé. Ainsi le bilan énergétique total du procédé est réduit.

On connaît, par ailleurs, du document DE4342165C1 un procédé de production de gaz de synthèse à partir de matière organique comprenant une première étape de thermolyse de ladite matière organique et une seconde étape séparée de gazéification de la matière organique thermolysée. Le gaz de thermolyse produit lors de la première étape est brulé sans purification préalable dans l'étape de gazéification de la matière organique thermolysée. Dans ce procédé, seul le gaz final subit une étape de purification.

### Description de l'invention

La présente invention a pour but de pallier les inconvénients de l'état de la technique en proposant un procédé économique capable de produire du Syngaz de bien meilleure qualité que celle obtenue avec une pyrolyse selon l'art antérieur. De plus, ce procédé permet d'améliorer le rendement énergétique global ainsi que la durée de vie des équipements.

Ainsi, la présente invention concerne un procédé de production d'un gaz de synthèse à partir d'une matière organique contenant un taux d'humidité inférieur à 20%, comportant une première étape de thermolyse i de ladite matière organique puis une seconde étape séparée de gazéification ii de la matière organique thermolysée, remarquable en ce que:
- l'étape de thermolyse i est réalisée par une montée en température de la matière première jusqu'à une température finale supérieure à 150°C et inférieure à 1400°C,
- l'étape de thermolyse i est effectuée sous une atmosphère gazeuse contrôlée dans laquelle la quantité d'oxygène apportée est inférieure à 20% de la quantité d'oxygène requise pour assurer la combustion stoechiométrique de la matière première organique,
- le gaz de thermolyse obtenu durant l'étape de thermolyse i est envoyé vers une étape d'épuration iii des éléments indésirables,
- la matière thermolysée est envoyée vers une étape de gazéification endothermique ii à une température de plus de 800°C permettant d'obtenir un gaz de gazéification,
- le gaz de gazéification subit une étape de récupération d'enthalpie v de telle sorte que sa température soit inférieure à 500°C,
- plus de 35% de l'énergie nécessaire à l'étape de thermolyse i est fournie par ladite étape de récupération d'enthalpie v.

Selon un mode de réalisation préféré de l'invention, tout ou partie du gaz de thermolyse épuré subit l'étape de gazéification endothermique ii.

Selon un mode de réalisation préféré de l'invention, tout ou partie du gaz de thermolyse épuré est mélangé avec le gaz de gazéification en amont de l'étape de récupération d'enthalpie v.

Selon un mode de réalisation préféré de l'invention, tout ou partie dudit gaz de thermolyse épuré, subit une étape de craquage puis est mélangé avec le gaz de gazéification en amont de l'étape de récupération d'enthalpie v.

Selon un mode de réalisation préféré de l'invention, tout ou partie dudit gaz de thermolyse épuré est mélangé avec le gaz de gazéification puis subit une étape de craquage en amont de l'étape de récupération d'enthalpie v.

Selon un mode de réalisation préféré de l'invention, tout ou partie du gaz de thermolyse épuré subit une étape de combustion iv fournissant de l'énergie à l'étape de gazéification endothermique ii. De façon encore plus préférée, l'agent comburant permettant la combustion séparée de tout ou partie du gaz de thermolyse épuré est de l'air enrichi en oxygène. De façon tout à fait préférée, du dihydrogène est ajouté audit agent comburant afin que les fumées de combustion produites contiennent de la vapeur d'eau.

Selon un mode de réalisation préféré de l'invention, la température à laquelle est réalisée l'étape de thermolyse i est comprise entre 300°C et 1400°C.

Selon un mode de réalisation encore plus préféré de l'invention, la température à laquelle est réalisée l'étape de thermolyse i est comprise entre 300°C et 800°C.

Selon un mode de réalisation tout à fait préféré de l'invention, la température à laquelle est réalisée l'étape de thermolyse i est comprise entre 400°C et 800°C.

Selon un mode de réalisation préféré de l'invention :
- l'étape de thermolyse i est effectuée en deux étapes en série, une première étape de thermolyse i' à une température comprise entre 250°C et 350°C et une seconde étape de thermolyse i'' à une température comprise entre 650°C et 750°C et les gaz issus de chacune de ces étapes i', i" étant extraits séparément et subissant une étape conjointe ou séparée d'épuration des éléments indésirables iii.

Selon un mode de réalisation préféré de l'invention, l'étape de thermolyse i est réalisée dans une enceinte et les gaz de thermolyse subissent un temps de rétention dans l'enceinte de thermolyse de moins de 5 secondes.

Selon un mode de réalisation préféré de l'invention, l'étape d'épuration iii comprend une étape d'épuration de poussières après mélange avec un ou plusieurs agents de collecte d'éléments indésirables.

Selon un mode de réalisation encore plus préféré, ledit agent de collecte est de la chaux.

Selon un mode de réalisation préféré de l'invention, l'étape d'épuration iii comprend une opération de condensation.

Selon un mode de réalisation préféré de l'invention, le procédé comporte une étape préalable de séchage de la matière organique afin d'ajuster son taux d'humidité compatible avec l'étape de thermolyse i.

Selon un mode de réalisation préféré de l'invention, le gaz de thermolyse épuré est utilisé en tout ou partie comme médium caloporteur principal ou complémentaire durant l'étape d'échange d'enthalpie v.

Selon un mode de réalisation préféré de l'invention, des particules solides indépendantes sont utilisés en tout ou partie comme médium caloporteur principal ou complémentaire durant l'étape d'échange d'enthalpie (v).

Selon un mode de réalisation préféré de l'invention, la quantité des éléments Cl, S, Na et K dans les matières traitées et/ou les gaz produits est analysée au niveau de l'étape i du procédé.

Selon un mode de réalisation préféré de l'invention, la quantité des éléments Carbone, Hydrogène et Oxygène, dits éléments CHO, dans les matières traitées et les gaz produits est analysée au niveau de tout ou partie des étapes i, ii, iii, iv, v du procédé.

### Avantages de l'invention

L'avantage de l'invention est que le procédé optimise la qualité du gaz produit en étageant au mieux les différentes étapes du procédé de façon à limiter la contamination des produits entre eux, notamment par des composés indésirables comme des éléments chlorés ou des goudrons.

Cela permet ainsi de produire un syngaz de très bonne qualité, dont le pouvoir calorifique inférieur est généralement supérieur à 8MJ/Nm3, dont la teneur cumulée en monoxyde de carbone et dihydrogène est supérieure à 70%,et dont la teneur en goudron est inférieure à 50 mg/Nm3.

Ainsi il est prévu une séparation de la production par thermolyse et gazéification. La thermolyse est volontairement conduite à une température inférieure à celle de la gazéification et en absence d'oxydant de façon à conserver une fraction contrôlée de char à l'issue de cette première étape, ledit char étant destiné à être gazéifié au cours de l'étape ultérieure de gazéification

De plus, les gaz de thermolyse subissent une épuration spécifique en sus de l'éventuelle filtration finale du procédé. Son coût économique est important car comparable à l'installation d'une double filtration en série sur les gaz totaux et finaux, voire à une double filtration en cascade des mêmes gaz totaux, alors que ces gaz de thermolyse ne concernent qu'une partie seulement du gaz total (en moyenne 60%), ces deux dernières solutions paraissant alors plus avantageuses car elles traitent le gaz total en évitant des risques de contournement (bypass) des contaminants à retenir. De plus les températures élevées imposent généralement d'utiliser des filtres en céramique ou en matière permettant de travailler à des températures élevées, plus onéreux que les filtres généralement proposés en polytétrafluoroéthylène. Ainsi cette préfiltration n'apporte a priori aucun avantage spécifique et évident à l'homme de l'art.

L'intérêt, cependant, de cette épuration est qu'elle permet d'évacuer spécifiquement le Chlore présent dans le gaz de Thermolyse afin de fortement augmenter le ratio de Soufre par rapport au Chlore dans le gaz total issu du procédé lors de son passage au stade du craquage à très haute température (typiquement 900 à 1250°C). Plus ce ratio est élevé, et plus les risques de corrosion chaude sont réduits. Par exemple un ratio molaire de 2S/Cl> 8 permettra d'obtenir un risque très réduit de corrosion.

Ainsi, grâce au procédé selon l'invention, le ratio molaire 2S/Cl peut être piloté et non plus subi, afin de réduire le risque corrosif. L'épuration préliminaire des gaz de thermolyse permet d'éliminer de façon préférentielle le chlore (typiquement 60% du chlore présent dans l'entrant est éliminé à une température de 400°C et 80% à 600°C) par rapport au soufre (sous forme d'H2S) du fait d'une volatilisation du chlore au stade de la thermolyse.

D'autres caractéristiques et avantages de l'invention ressortiront de la description détaillée qui va suivre des modes de réalisation non limitatifs de l'invention, en référence aux figures annexées, dans lesquelles :

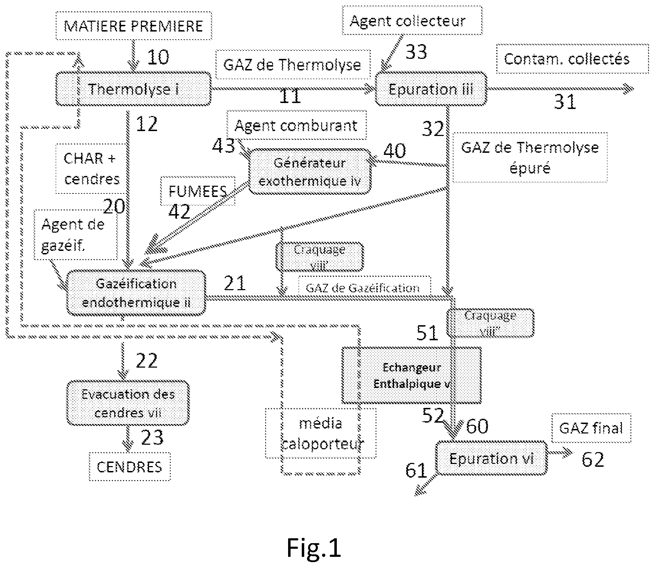

- la figure 1 représente schématiquement le procédé selon une variante de l'invention.

### Exposé d'un mode de réalisation

La matière première qui est ciblée par l'invention est typiquement, mais pas exclusivement, de la biomasse ou des déchets ménagers. Parmi les difficultés qu'il faut surmonter, plusieurs éléments peuvent être relevés:
La biomasse a une composition évidemment très variable mais elle se caractérise notamment par une présence d'humidité souvent importante. Par exemple l'humidité présente dans de la plaquette forestière fraîche est généralement supérieure à 35%. Cette humidité est définie par le ratio entre la masse d'eau contenue dans la matière humide et la masse résiduelle de la matière sèche anhydre après séchage dans une étuve à air ventilé d'une température de 103°C ± 2°C. Or, la présence d'eau excédentaire dans le procédé favorise la formation de composés oxydés comme le dioxyde de carbone au détriment du syngaz. Il est nécessaire de contrôler le taux d'humidité de la matière première, donc par ricochet de maîtriser la quantité d'eau qui entre dans le système avec la matière première.

De plus, la biomasse contient souvent des éléments alcalins comme le potassium. Cet élément présente la propriété d'abaisser la température de fusion des cendres, des valeurs inférieures à 850°C étant régulièrement observées, ce qui perturbe l'évacuation des cendres qui fondent de façon incontrôlée et collent aux parois de l'équipement, conduisant à son encrassement progressif et à la perturbation des échanges thermiques. Il est nécessaire de contrôler le comportement des cendres, soit en veillant à ce qu'elles restent pulvérulentes sans fusion, soit en veillant à ce qu'elles fondent en permanence. Une situation intermédiaire aléatoire n'est pas tenable industriellement.

Dans le cas des déchets ménagers, il est courant de rencontrer des plastiques contenant du chlore. Cet élément présente le défaut de se vaporiser à très basse température (à moins de 200°C) et de se combiner avec de l'hydrogène présent dans le procédé, assurant ainsi la production d'acide chlorhydrique HCL sous forme gazeuse. La présence d'acide chlorhydrique contribue fortement à la corrosion accélérée de la grande majorité des métaux, y compris les métaux austénitiques, notamment à des températures supérieures à 650°C.

De façon générale, l'invention propose de procéder à une production de gaz synthétique contenant principalement du monoxyde de carbone et du dihydrogène. De façon préférée, ce taux sera d'au moins 50% de la composition gazeuse du produit fini. De façon encore plus préférée, ce taux sera d'au moins 85% de la composition gazeuse finale.

Comme représenté à la figure 1, le procédé général comprend une étape de thermolyse i alimentée en matière première 10 et au cours de laquelle le flux de gaz de thermolyse 11 est extrait et séparé du flux de matière thermolysée 12. Le flux de matière thermolysée 12 est ensuite soumis à une étape de gazéification ii à l'issue de laquelle le flux de gaz de gazéification 21 est extrait. La matière gazéifiée résiduelle 22 est composée de cendres minérales et est évacuée durant une étape d'évacuation des cendres vii.

Le gaz de thermolyse brut 11 extrait de l'étape de thermolyse i est ensuite soumis à une étape d'épuration iii de façon à en éliminer des éléments indésirables et forme ainsi un gaz de thermolyse épuré 32.

De façon avantageuse, il subit ensuite partiellement ou totalement l'étape de gazéification ii, accompagnant ainsi le flux de matière thermolysée 12. Dans ce cas, l'avantage d'avoir préalablement épuré ce gaz de thermolyse 11 limite la création d'éléments chlorés ou soufrés qui pourraient perturber le procédé.

La part de gaz de thermolyse épuré 32 non envoyée à l'étape de gazéification ii est mélangée au gaz de gazéification 21 et le mélange est ensuite soumis à une étape de récupération d'enthalpie v puis une étape d'épuration ultime vi avant de devenir le syngaz produit 62.

Les étapes sont décrites séparément afin d'en faciliter la compréhension. Toutefois, dans le cadre d'un dispositif mettant en oeuvre le procédé, plusieurs étapes peuvent avoir lieu dans un même équipement, à condition que les transformations subies par la matière respectent la succession imposée par le procédé.

De plus, le procédé selon l'invention est conçu comme un procédé fermé pour l'élément carbone sous forme gazeuse, c'est-à-dire que le point d'entrée en carbone est l'entrée de matière première 10 et le point de sortie est la sortie de syngaz produit 62. Les éléments qui sortent du procédé par d'autres branches du procédé sont des rejets solides ou liquides, contenant moins de 3% de carbone.

La description plus détaillée de la succession des étapes du procédé est la suivante:
La thermolyse selon l'invention est une étape de transformation de la matière carbonée par réduction de la longueur de la chaine carbonée sous l'effet d'une température supérieure à 150°C, sous une pénurie d'oxygène gazeux et sur une matière première relativement sèche.

La température d'au moins 150°C et de moins de 1400°C a pour objectif de volatiliser les éléments légers associés à la matière première. Les vapeurs condensables obtenues contiennent notamment de l'eau et des huiles légères. Du gaz est aussi créé, tel du monoxyde de carbone.

De façon préférée, la thermolyse est effectuée à une température comprise entre 300°C et 1250°C. Le fonctionnement à 300°C a pour objectif d'évaporer les composants les plus légers et de maximiser la quantité de carbone qui est envoyée à l'étape de gazéification. L'avantage est de se consacrer principalement à l'épuration des éléments volatils légers comme les composés chlorés. Le fonctionnement à 1250°C répond inversement à l'objectif de produire du char le plus pur possible en assurant la libération de tous les éléments ayant une températures de vaporisation inférieure, quitte à en volatiliser une partie vers la sortie de gaz de thermolyse.

De façon plus préférée, la thermolyse est effectuée à une température comprise entre 300°C et 800°C.

De façon encore plus préférée, la thermolyse est effectuée à une température comprise entre 350°C et 560°C. Ainsi, d'une part, les goudrons qui se volatilisent au delà de 600°C ne peuvent contaminer le gaz de thermolyse. D'autre part, la température des parois du thermolyseur demeurent inférieures aux températures critiques pour la corrosion par les gaz acides.

La pénurie d'oxygène gazeux a pour but de limiter l'oxydation des éléments volatilisés. Notamment la quantité d'oxygène gazeux présent dans l'enceinte dans laquelle a lieu la thermolyse est avantageusement ajustée de façon à garantir qu'elle reste inférieure à 20% de la quantité d'oxygène requise pour assurer la combustion stoechiométrique, donc parfaite, de la matière première organique présente dans l'enceinte. Seule cette pénurie d'oxygène garantit qu'il ne s'effectue pas de combustion parasite de la matière première, qui aurait pour effet de créer du dioxyde de carbone et de consommer du carbone, alors non valorisé par le procédé.

Cette limitation de quantité d'oxygène dans l'enceinte de thermolyse exige l'utilisation d'un dispositif de thermolyse suffisamment étanche pour que les échanges gazeux avec l'ambiance extérieure par où arrive la matière première ou par où sortent les produits de thermolyse ne permettent pas l'entrée d'oxygène de façon incontrôlée. Par exemple, l'alimentation de matière première comprendra un dispositif de sas à deux vannes étanches fonctionnant en alternance.

Inversement une pénurie continue et totale d'oxygène n'est pas industriellement crédible et une fluctuation incontrôlée de la quantité d'oxygène présent est plus représentative de la réalité. Afin de s'affranchir de la variation de comportement trop grande durant la thermolyse dans l'éventualité d'une variation incontrôlée de la quantité d'oxygène, il est avantageux de disposer d'un procédé de régulation du taux d'oxygène dans l'enceinte, afin de garantir une présence d'oxygène la plus basse possible. De façon préférée, le taux d'oxygène doit demeurer entre 1% et 10% de la valeur permettant une combustion stoechiométrique totale de la matière présente. De façon plus préférée, la plage est entre 2% et 5% d'oxygène.

De façon avantageuse, une solution de régulation du taux d'oxygène peut être obtenue par injection de syngaz produit, de sorte que le monoxyde de carbone capte l'oxygène et produise du dioxyde de carbone sans effet sur la réaction, et/ou de sorte que l'hydrogène capte l'oxygène et produise de l'eau.

La mesure de l'oxygène présent dans l'enceinte peut s'effectuer à l'aide de sondes de mesure placées directement dans l'enceinte de thermolyse, ou placées sur les entrées et sorties de gaz ou matière de l'enceinte, de façon à déterminer par déduction les flux d'oxygène qui y circulent. Cette méthode indirecte permet de réduire la température à laquelle les sondes sont soumises.

De façon plus large, toute sorte de régulation de taux d'oxygène évidente à l'homme de l'art et préservant le rendement du procédé ou la qualité des gaz produits est envisageable.

La matière doit être peu humide, c'est-à-dire que son taux d'humidité, définie par le ratio entre la masse d'eau contenue dans la matière à l'état humide et la masse sèche de cette matière anhydre doit être inférieur à 20% lorsqu'elle est soumise à l'étape de thermolyse i.

On entend par "étape de thermolyse" le fait d'être soumis à une température adéquate comme décrit plus haut et aussi le fait de capter et d'évacuer les gaz émis sous forme de gaz de thermolyse. Ainsi un dispositif qui réaliserait cette étape de thermolyse parmi d'autres actions préalables comme par exemple un séchage ou un broyage de la matière première est bien un dispositif qui applique la thermolyse telle que décrite par l'invention.

Cette contrainte d'humidité maximale permet de réduire la consommation d'enthalpie nécessaire pour monter en température la matière première, notamment l'enthalpie correspondant à la vaporisation de l'eau liquide introduite avec la matière première.

Elle permet aussi de minimiser la consommation de carbone durant la thermolyse par la présence d'eau excédentaire dans le procédé, induisant la production de dioxyde de carbone au détriment du syngaz.

Mais l'humidité ne doit pas non plus être trop faible ou variable de façon incontrôlée car cela peut déstabiliser les réactions chimiques.

Ainsi, de façon préférée le taux d'humidité doit être supérieur à 5% et inférieur à 15%, et de façon encore plus préférée être supérieur à 8% et inférieur à 10%.

Il est aussi préférable d'utiliser une régulation de l'humidité de la matière première à l'entrée dans l'étape de thermolyse avec captation spécifique de la vapeur d'eau, par exemple à l'aide d'un séchoir à tapis basse température.

La durée et/ou la température de l'étape de thermolyse i sont préférentiellement régulés de sorte à obtenir un ratio molaire 2S/(Cl+Na+K), dans la matière thermolysée, supérieure 2, encore plus préférentiellement supérieure à 4 et tout à fait préférentiellement à 8.

La mesure de la quantité des éléments S, CL, Na et K présent dans l'enceinte peut s'effectuer à l'aide de sondes de mesure placées directement dans l'enceinte de thermolyse, ou placées sur les entrées et sorties de gaz ou matière de l'enceinte, de façon à déterminer par déduction les quantités présentes.

Ainsi, les éléments chlorés et alcalins (potassium, sodium notamment sous sa forme NaCl) peuvent eux-mêmes être extraits de façon sélective par la gestion de la température de thermolyse pour vaporiser spécifiquement ces éléments. Ainsi les risques de dépôt de ces éléments sont réduits ainsi que l'influence de ces alcalins sur le phénomène de corrosion chaude.

A l'issue de la thermolyse i, la matière solide contient des cendres minérales, du char ou carbone pur et éventuellement des chaînes carbonées non réduites parce que la température maximale de la thermolyse n'a pas été suffisante.

L'étape de gazéification ii permet alors de terminer la réduction des chaînes carbonées et aussi transformer le carbone-char en monoxyde de carbone. Cette réaction est obtenue grâce à l'ajout d'un agent de gazéification de type H2O ou CO2 par exemple et grâce à l'exposition de la matière à une température de plus de 800°C.

De façon préférée, la gazéification est effectuée à une température supérieure à 1000°C, et de façon plus préférée à une température de plus de 1200°C.

La gazéification est une réaction endothermique qui exige un apport d'énergie calorique.

Selon une variante de l'invention, cet apport d'énergie est assuré par une étape additionnelle de génération d'énergie calorique iv par un procédé de combustion d'une partie du gaz de thermolyse épuré 32 ou du gaz de gazéification 21 additionné d'un agent comburant comme de l'air ou de l'oxygène, dont la combustion génère des fumées chaudes ayant une température de plus de 800°C et qui injectée à l'entrée de l'étape de gazéification afin d'y apporter tout ou partie de l'énergie requise. Il est préférable de minimiser la dilution par l'azote de l'air durant cette combustion, par exemple en employant comme comburant un air enrichi en oxygène, dont le taux d'oxygène est supérieur à 40%, ou de façon plus préférée supérieur à 60%.

Selon une autre variante de l'invention, l'apport d'énergie calorique peut s'effectuer par une étape spécifique de combustion d'hydrogène avec de l'oxygène. L'intérêt de cette solution est que l'apport d'azote devient négligeable et que cette réaction très exothermique permet aisément de monter la température de gazéification au delà de 1200°C, la température adiabatique de la flamme issue de la combustion H2 + 02 étant de 3200°C. De plus, la combustion d'hydrogène et d'oxygène permet de produire de l'eau qui sert alors d'agent de gazéification.

Selon une autre variante de l'invention, l'apport d'énergie calorique peut s'effectuer grâce à l'utilisation de moyens de chauffage électrique, disposé dans l'équipement réalisant l'étape de gazéification ii, soit comme apport principal de l'énergie requise par la réaction endothermique, soit en complément de l'apport d'une des solutions décrite ci-dessus. L'impact de cette consommation électrique sur le bilan économique du procédé peut se révéler favorable si le syngaz produit est valorisé par une production électrique de rendement supérieur à 42%, tel celui obtenu par l'utilisation d'un moteur à explosion ou d'un cycle combiné mettant en oeuvre une turbine à gaz et une turbine à vapeur. Alors, la part d'électricité consommée est compensée par l'économie de combustible lors de l'étape de combustion iv, mais aussi par l'économie de certains auxiliaires électriques autrement requis, notamment pour la production d'oxygène par séparation membranaire.

A l'issue de l'étape de gazéification ii, les cendres sont avantageusement évacuées du procédé par une étape d'évacuation vii. Si la matière première, par exemple des plantes annuelles, contient des éléments favorisant l'apparition de cendres fondantes en deçà de 850°C, dont notamment du potassium, alors il peut être préférable de favoriser cette fusion par l'addition d'éléments fondants, par exemple au niveau de l'étape de gazéification ii, de sorte que les cendres seront évacuées sous forme liquide de l'étape de gazéification ii pour ensuite être refroidies et vitrifiées durant l'étape d'évacuation vii.

Selon l'invention, le gaz de thermolyse est préférentiellement extrait de la thermolyse à une température suffisante de façon à extraire de la matière première des vapeurs volatiles qui ont une température de vaporisation comprise entre 300°C et 800°C. Notamment il s'agit de collecter et extraire du flux de gaz de thermolyse les composés à base de chlore et de soufre, dont la température d'évaporation est inférieure à 300°C. A cette fin, un agent collecteur de type charbon actif ou chaux est introduit dans le flux gazeux et mélangé intimement avec lui, de façon à permettre la collecte des vapeurs ciblées. Ensuite, ce gaz chargé d'agent collecteur est filtré dans un moyen de filtration de poussière tel un cyclone et/ou un électrofiltre et/ou un filtre à manches et/ou un filtre à cartouches en céramique ; de sorte que les agents collecteurs soient évacués du flux de gaz sous forme de rejet de contaminants collectés 31. Le gaz de thermolyse épuré 32 est alors disponible pour subir d'autres étapes.

Ainsi selon un mode de réalisation préféré de l'invention, ladite étape d'épuration ii comprend le mélange dudit gaz de thermolyse avec de la chaux à une température comprise entre 300 et 350°C et préférentiellement entre 320 et 340°C.

Le gaz de thermolyse obtenu durant l'étape de thermolyse i est envoyé seul vers une étape d'épuration iii des éléments indésirables. Dans le cadre de la présente invention, le terme « le gaz de thermolyse obtenu durant l'étape de thermolyse i est envoyé seul vers une étape d'épuration iii des éléments indésirables » entend signifier que le gaz de thermolyse est envoyé directement vers l'étape d'épuration iii sans subir de modification chimique préalable ni être mélangé avec un autre gaz et notamment pas avec un gaz de gazéification. Ce terme entend particulièrement signifier que ledit gaz de thermolyse est envoyé vers une étape d'épuration iii des éléments indésirables avant de subir éventuellement l'étape de gazéification endothermique ii.

Selon un mode de réalisation préféré de l'invention, tout le gaz de thermolyse obtenu durant l'étape de thermolyse i est envoyé seul vers une étape d'épuration iii des éléments indésirables.

Cette épuration permet d'accumuler plusieurs avantages déterminants :
La sensibilité aux corrosions accélérées à haute température des échangeurs étant fortement à très fortement réduites, les températures d'échanges peuvent être sensiblement relevées et la performance des échangeurs (réduction des pincements thermiques) améliorée. Il en résulte un meilleur recyclage de l'enthalpie, et une récupération d'énergie à des températures plus élevées.

La réduction en préfiltration du taux d'alcalins, permet de relever la température de fusion des cendres, et prévenir la formation/l'accumulation des mâchefers.

Durant cette étape d'épuration, il est possible qu'une condensation parasite apparaisse, notamment si certaines parois des moyens de mélange de l'agent collecteur et de filtration sont dites froides et causent un refroidissement du gaz au dessous de son point de rosée. Cela risque de faire apparaître des condensats d'acide chlorhydrique ou autres acides susceptibles de corroder les parois de l'équipement. Afin d'éviter cette situation, il est avantageux d'associer au dispositif permettant d'assurer cette étape d'épuration de gaz de thermolyse un moyen de chauffage interne et/ou un préchauffage de l'agent collecteur et/ou un calorifugeage des parois des équipements impliquées, afin de s'assurer que le gaz de thermolyse 11 à épurer ne puisse pas être trop refroidi durant son épuration et atteindre son point de rosée.

Selon une variante de l'invention, ce point de rosée est au contraire recherché, dans une étape spécifique de condensation. Durant cette étape, le gaz circule dans un moyen de condensation alimenté en fluide froid c'est-à-dire à une température inférieure à celle du gaz, de sorte qu'une condensation des vapeurs condensables à la température visée apparaisse. Le matériau choisi pour ce moyen de condensation est évidemment compatible avec l'acide chlorhydrique qui peut apparaître, ou tout autre produit agressif. Les condensats sont alors extraits de ce moyen et traités spécifiquement pour neutraliser leur dangerosité.

L'étape d'épuration iii du gaz de thermolyse suivie éventuellement d'une filtration ultime vi des gaz totaux (gaz de thermolyse + gaz de gazéification) permet d'envisager une filière différenciée de traitement des cendres, celles-ci étant de nature très différentes. Cela présente l'intérêt de coûts de traitement et de mise en décharge optimisés.

Le char volontairement non transformé en première étape peut subir une désorption des éléments volatils adsorbés, ainsi qu'un effritement à l'état pulvérulent qui accélère grandement la pénétration du front de gazéification, sans nécessiter la forte consommation d'énergie d'un broyage fin des entrants bruts, notamment ligno-cellulosiques (à la différence du lit fluidisé qui exige des entrants finement broyés et calibrés, ce qui représente un coût énergétique et économique très significatifs).

La meilleure propreté des gaz obtenus permet d'améliorer le pincement thermique des échangeurs de chaleur nécessaires à la récupération de la chaleur contenue dans les gaz. Ainsi le pincement peut être inférieur à 50°C au lieu des 150°C habituels.

La meilleure performance de la recirculation interne de l'enthalpie des gaz, avec idéalement une température de sortie des gaz finaux à une température inférieure à 400°C, limite très fortement la consommation d'énergie extérieure ou bien l'autoconsommation d'une partie du gaz produit. En effet on réutilise en interne vers l'amont l'énergie disponible en sortie du procédé. Les gaz chauds apportent l'énergie nécessaire à la fois pour assurer la thermolyse tout en assurant un préchauffage des gaz à l'entrée de l'étape finale de craquage.

Les matières premières problématiques (substrats agricoles, feuilles, rafle de maïs, PVC,...) peuvent enfin être valorisées avec de très bons rendements énergétiques grâce à l'invention.

Selon une variante de l'invention, le gaz de gazéification ainsi que le gaz de thermolyse doivent subir une réaction de craquage afin de transformer les goudrons contenus dans le gaz en chaines carbonées plus courtes et moins perturbatrices du fonctionnement. A cette fin, le gaz subit préférentiellement au moins un temps de séjour supérieur à 1 seconde à une ambiance de plus de 880°C.

Selon les différentes variantes de l'invention, les cas suivants sont notamment possibles:
Si un gaz subit une étape de combustion iv, il est considéré traité si la combustion est opérée à plus de 880°C.

Si un gaz subit une étape de gazéification ii, il est considéré traité si la gazéification est opérée à plus de 880°C.

Si le gaz de thermolyse épuré 32 est mélangé avec le gaz de gazéification 21 et que la température de l'ensemble atteint plus de 880°C pendant plus de 1s, alors le gaz est considéré traité.

Enfin, selon les variantes de procédé, une partie de gaz peut subir une étape de craquage spécifique viii. Par exemple, ce craquage peut être appliqué soit sur le flux de gaz de thermolyse épuré 32 avant mélange avec le gaz de gazéification, en tant qu'étape de craquage viii', soit sur le flux de gaz en mélange de gaz de thermolyse épuré 32 et de gaz de gazéification 21 en tant qu'étape de craquage viii''.

Afin de garantir un bon rendement global du procédé, une partie de l'énergie contenue dans le gaz produit 51 est récupérée par le biais d'une étape de récupération d'énergie enthalpique v à l'aide d'un dispositif échangeur de chaleur qui permet l'échange de chaleur, voire d'enthalpie si des phénomènes de condensation et de récupération de chaleur latente ont lieu, entre le gaz produit 51, donneur d'enthalpie, et un médium caloporteur, preneur d'enthalpie, qui est ensuite retourné vers l'étape de thermolyse i afin d'alimenter cette étape en chaleur. Cette enthalpie est nécessaire à la thermolyse et selon l'invention, elle correspond avantageusement à au moins 35% de l'enthalpie requise durant la thermolyse afin d'assurer la montée en température et la transformation de la matière première. De façon préférée, cette enthalpie correspond à plus de 70% du besoin d'enthalpie en thermolyse.

Le médium caloporteur circule dans un circuit indépendant étanche entre cette étape de réchauffage auprès du gaz produit et l'étape de thermolyse.

Il peut être un gaz ou un liquide comme des sels fondus ou une huile minérale.

Selon une variante de l'invention, le médium preneur d'enthalpie comprend des particules solides indépendantes.

Ce médium va pouvoir être traversé par le gaz apporteur d'enthalpie puis ajouté dans l'enceinte de thermolyse où il va relarguer ladite enthalpie. Préférentiellement, les particules solides indépendantes circulent en circuit fermé entre la zone de capture d'enthalpie et l'enceinte de thermolyse. La circulation de ces particules peut notamment être obtenue par l'action de la gravité et par un moyen de transport de type vis d'Archimède ou convoyeur à godet.

Dans ce circuit, lesdites particules solides indépendantes sont préférentiellement entassées sous l'effet de leur poids.

Selon un mode de réalisation préféré de l'invention, les particules solides indépendantes sont des sphères de diamètre compris entre 3mm et 100mm
Selon un mode de réalisation préféré de l'invention, les particules solides indépendantes sont des corps pleins percés d'au moins deux trous traversants.

Selon un mode de réalisation préféré de l'invention, les particules solides indépendantes sont constituées d'un matériau de conductivité thermique supérieure à 0.2 W/mK.

Selon un mode de réalisation préféré de l'invention, les particules solides indépendantes sont constituées de deux matériaux différents et l'un des matériaux constitue l'enveloppe extérieure de la particule et l'autre matériau constitue le coeur de la particule et présente une température de fusion inférieure à celle du matériau constituant l'enveloppe extérieure.

Les particules solides indépendantes disposent d'une masse qui permet d'accumuler de l'enthalpie sous l'effet de la montée en température et selon sa capacité thermique massique exprimée dans l'unité J/(kg.K). Ainsi, il est nécessaire de disposer d'un média de grande masse et/ou de grande capacité thermique massique qui présente une grande inertie thermique.

Par exemple, la particule solide indépendante peut être une bille d'acier au molybdène réfractaire creuse dont la température de fusion dépasse 2600°C, remplie d'un alliage d'aluminium dont la température de fusion est de 600°C, peut stocker, lors du changement de phase solide-liquide de l'aluminium à cette température fixe de 600°C, plus de 370kJ/kg d'aluminium soit l'équivalent de la chaleur sensible d'un kg d'aluminium s'échauffant de 400°C.

L'utilisation de particules solides indépendantes, telles que décrites ci-dessus, permet de transmettre de grandes quantités d'énergie même avec de petits débits de gaz produits.Selon une variante de l'invention, le médium preneur d'enthalpie peut être tout ou partie du gaz de thermolyse épuré 32, qui circule dans l'échangeur d'enthalpie et est donc réchauffé pour ensuite être utilisé comme apporteur d'énergie calorique dans l'étape de thermolyse i.

A l'issue de cet échange enthalpique v, après abaissement à une température inférieure à 500°C, le gaz produit 52 subit une étape d'épuration comme, par exemple, une ultime filtration par cyclones et/ou filtres à manches. De façon préférée, le gaz refroidi 52 a une température inférieure à 300°C, et de façon encore plus préférée inférieure à 150°C.

Selon une variante de l'invention, il est avantageux de séparer l'étape de récupération d'enthalpie v en deux étapes; la première assure une température du gaz entre 850°C et 1050°C de façon à lui faire alors subir une étape de captation d'oxydes d'azote de type SNCR par injection d'urée, puis une seconde récupération d'enthalpie qui assure la baisse de température finale.

Selon l'invention, l'enthalpie requise durant l'étape de thermolyse est apportée par un retour du médium caloporteur, mais il est possible que cet apport ne suffise pas, notamment pour assurer la désorption d'éléments volatils adsorbés par les agrégats de char. La désorption se définit comme la réaction inverse de l'adsorption, mais aussi de l'absorption, l'objectif principal étant de rompre les interactions de Van der Waals. Il est alors avantageux de compléter le besoin d'énergie, par un apport auxiliaire qui peut être assuré par un chauffage électrique et/ou par un apport en gaz de gazéification venant de l'aval du procédé.

Selon une variante de l'invention, la thermolyse est effectuée en deux étapes séparées, l'une à une température comprise entre 250°C et 350°C, et l'autre à une température comprise entre 650°C et 750°C. Ainsi chaque étape permet de produire du gaz de thermolyse spécifique qui subit alors une étape d'épuration iii spécifique, ou conjointe si les gaz sont rassemblés avant l'épuration. L'étape de thermolyse à basse température cible l'élimination des éléments chlorés, et celle à haute température celle des éléments alcalins dont la température de vaporisation avoisine les 600°C, ainsi qu'une fraction du soufre. De plus les goudrons les plus lourds et susceptibles d'encrasser les équipements seront contenus dans ce second gaz de thermolyse. Ces gaz sont alors avantageusement soumis spécifiquement à une étape de craquage de goudrons.

Selon une variante de l'invention, l'étape de thermolyse ne consiste pas seulement à chauffer la matière première en pénurie d'oxygène mais aussi à procéder à une action mécanique d'effritement de celle-ci afin que le char produit en surface des éléments de matière première soient détachés de ceux-ci afin d'accélérer la thermolyse des couches inférieures et favoriser la libération de l'hydrogène, de l'oxygène, du soufre, du chlore résiduel, du cadmium et du zinc.

Selon une variante de l'invention, l'étape de thermolyse est améliorée par la régulation du temps de séjour des gaz de thermolyse produits dans le dispositif de thermolyse. Il est ainsi avantageux de veiller à ce que les gaz produits ne séjournent pas plus de 5 secondes, ou de façon préférée pas plus de 3 secondes, afin de limiter leur redéposition sur des éléments de matière première.

Selon une variante de l'invention, le char et les cendres issus de l'étape de thermolyse i sont broyés ou effrités en une poudre dont les particules ont une taille moyenne inférieure à 0.6 mm avant de leur faire subir l'étape de gazéification ii.

Selon une autre variante, le broyage et/ou effritage sont précédés d'un refroidissement afin de rendre le char plus friable et faciliter ainsi le broyage ultérieur.

Selon une variante préférée de l'invention, la matière thermolysée 12 subit une étape de désorption avant l'étape de gazéification ii. Durant cette étape la matière thermolysée 12 est chauffée à une température supérieure à 950°C et les gaz sont extraits spécifiquement. Cette opération s'apparente à une thermolyse complémentaire dont le rôle est de garantir l'obtention d'un char pur, c'est-à-dire ne contenant que très peu d'hydrogène, d'oxygène, d'azote, de chlore, de soufre, de potassium, de zinc, de cadmium et de phosphore.

Selon une variante de l'invention, une régulation globale du procédé est appliquée, afin d'optimiser les réactions et d'obtenir un gaz final le plus pur possible.

A cette fin, la circulation des éléments Carbone, Hydrogène et Oxygène, dits éléments CHO, est analysée et régulée dans diverses branches du procédé:
La matière première est analysée avant son introduction dans le procédé, afin de déterminer sa composition équivalente en C, H et O. Par exemple la composition de plaquettes de bois peut être simplifiée en C6H9O4, c'est-à-dire que la cellulose et la lignine contenues apportent l'équivalent de 6 moles de C, 9 moles de H et 4 moles de O. Sa teneur en humidité est aussi mesurée, car étant source de H2O.

Lors de la thermolyse, des éléments C H O sont évacués dans le gaz de thermolyse 11. Une mesure du débit de CO, CO2, H2, CH4 et H20 permet de déterminer la part des éléments C H O qui sont évacués dans le gaz de thermolyse.

La différence entre les éléments C H O introduits avec la matière première et les éléments C H O évacués dans les gaz de thermolyse représente les éléments C H O retenus dans la matière thermolysée 12 et envoyés vers la gazéification.

Il est alors possible de vérifier que la thermolyse fonctionne correctement et de planifier la réaction de gazéification, notamment quelle quantité d'agent de gazéification, tel de l'eau ou du dioxyde de carbone, est requise. Par exemple, si la matière première contenait 100 moles de C et que l'on en retrouve 70 dans le gaz de thermolyse, principalement sous forme de CO et CO2, partiellement sous forme de CH4, alors on peut déduire qu'il en reste 30 moles dans le flux de solide thermolysé 12. Pour gazéifier ces 30 moles en CO, il faut disposer de 30 moles de O, donc introduire 30 moles de H2O comme agent de gazéification.

Mais le retour de gaz de thermolyse par les fumées de l'étape éventuelle de combustion exothermique iv et par l'injection directe de gaz de thermolyse épuré 32 amène aussi du H2O dont le débit doit venir en déduction des 30 moles citées plus haut.

Puis une analyse de la composition des gaz de gazéification 21 permet de déterminer la proportion d'éléments C H O qui est évacuée comme gaz de gazéification et donc de surveiller que les résidus solides de gazéification ne contiennent pas de Carbone non gazéifié.

Pour affiner la mesure, il est avantageux de surveiller le débit de H2O qui est évacué dans le gaz final 62. Ainsi on peut contrôler que ce débit est proche de zéro si toutes les réactions sont équilibrées.

Ce suivi fin des débits d'éléments C H O introduits et rejetés par le procédé permet ainsi de prévoir le besoin des injections spécifiques de réactifs tels O2, H2O, H2 et de surveiller que les réactions sont équilibrées.

## Revendications

1. Procédé de production d'un gaz de synthèse (62) à partir d'une matière organique (10) contenant un taux d'humidité inférieur à 20%, comportant une première étape de thermolyse (i) de ladite matière organique (10) puis une seconde étape séparée de gazéification (ii) de la matière organique thermolysée (12), **caractérisé en ce que**:
- l'étape de thermolyse (i) est réalisée par une montée en température de la matière première (10) jusqu'à une température finale supérieure à 150°C et inférieure à 1400°C,
- l'étape de thermolyse (i) est effectuée sous une atmosphère gazeuse contrôlée dans laquelle la quantité d'oxygène apportée est inférieure à 20% de la quantité d'oxygène requise pour assurer la combustion stoechiométrique de la matière première organique,
- le gaz de thermolyse (11) obtenu durant l'étape de thermolyse (i) est envoyé vers une étape d'épuration (iii) des éléments indésirables,
- la matière thermolysée (12) est envoyée vers une étape de gazéification endothermique (ii) à une température de plus de 800°C permettant d'obtenir un gaz de gazéification (21),
- le gaz de gazéification (21) subit une étape de récupération d'enthalpie (v) de telle sorte que sa température soit inférieure à 500°C,
- plus de 35% de l'énergie nécessaire à l'étape de thermolyse (i) est fournie par ladite étape de récupération d'enthalpie (v).

2. Procédé selon la revendication 1, **caractérisé en ce que** tout ou partie du gaz de thermolyse épuré (32) subit l'étape de gazéification endothermique (ii).

3. Procédé selon la revendication 1 ou 2, **caractérisé en ce que** tout ou partie du gaz de thermolyse épuré (32) est mélangé avec le gaz de gazéification (21) en amont de l'étape de récupération d'enthalpie (v).

4. Procédé selon la revendication 3, **caractérisé en ce que** tout ou partie dudit gaz de thermolyse épuré (32), subit une étape de craquage puis est mélangé avec le gaz de gazéification (21) en amont de l'étape de récupération d'enthalpie (v).

5. Procédé selon la revendication 3, **caractérisé en ce que** tout ou partie dudit gaz de thermolyse épuré (32) est mélangé avec le gaz de gazéification (21) puis subit une étape de craquage en amont de l'étape de récupération d'enthalpie (v) .

6. Procédé selon l'une des revendications précédentes, **caractérisé en ce que** tout ou partie du gaz de thermolyse épuré (32) subit une étape de combustion (iv) fournissant de l'énergie à l'étape de gazéification endothermique (ii).

7. Procédé selon l'une des revendications précédentes, **caractérisé en ce que** la durée et la température de l'étape de thermolyse (i) est régulé de sorte à obtenir un ratio molaire 2S/(Cl+Na+K), dans la matière thermolysée (12), supérieure à 4 et encore plus préférentiellement supérieure à 8.

8. Procédé selon l'une des revendications précédentes, **caractérisé en ce que** l'étape de thermolyse (i) est effectuée en deux étapes en série, une première étape de thermolyse (i') à une température comprise entre 250°C et 350°C et une seconde étape de thermolyse (i'') à une température comprise entre 650°C et 750°C et **en ce que** les gaz issus de chacune de ces étapes (i', i'') sont extraits séparément et subissent une étape conjointe ou séparée d'épuration des éléments indésirables (iii).

9. Procédé selon l'une des revendications précédentes, **caractérisé en ce que** l'étape d'épuration (iii) comprend une étape d'épuration de poussières après mélange avec un ou plusieurs agents de collecte d'éléments indésirables.

10. Procédé selon l'une des revendications précédentes, **caractérisé en ce que** l'étape d'épuration (iii) comprend une opération de condensation.

11. Procédé selon l'une des revendications précédentes, **caractérisé en ce que** le gaz de thermolyse épuré (32) est utilisé en tout ou partie comme médium caloporteur principal ou complémentaire durant l'étape d'échange d'enthalpie (v).

12. Procédé selon l'une des revendications précédentes, **caractérisé en ce que** des particules solides indépendantes sont utilisés en tout ou partie comme médium caloporteur principal ou complémentaire durant l'étape d'échange d'enthalpie (v).

13. Procédé selon l'une des revendications précédentes, **caractérisé en ce que** la quantité des éléments Cl, S, Na et K dans les matières traitées et/ou les gaz produits est analysée au niveau de l'étape i.

14. Procédé selon l'une des revendications précédentes, **caractérisé en ce que** la quantité des éléments Carbone, Hydrogène et Oxygène, dits éléments CHO, dans les matières traitées et les gaz produits est analysée au niveau de tout ou partie des étapes (i, ii, iii, iv, v) du procédé.

## Patentansprüche

1. Verfahren zur Herstellung eines Synthesegases (62) aus einem organischen Material (10), das einen Feuchtigkeitsgehalt von weniger als 20 % enthält, umfassend einen ersten Schritt der Thermolyse (i) des organischen Materials (10), und anschließend einen getrennten zweiten Schritt der Vergasung (ii) des thermolysierten organischen Materials (12), **dadurch gekennzeichnet, dass**:
- der Thermolyseschritt (i) durch eine Temperaturerhöhung des Ausgangsmaterials (10) bis auf eine endgültige Temperatur von mehr als 150 °C und weniger als 1400 °C ausgeführt wird,
- der Thermolyseschritt (i) unter einer kontrollierten Gasatmosphäre vorgenommen wird, in der die zugeführte Sauerstoffmenge weniger als 20 % der Sauerstoffmenge beträgt, die erforderlich ist, um die stöchiometrische Verbrennung des organischen Ausgangsmaterials sicherzustellen,
- das beim Thermolyseschritt (i) erhaltene Thermolysegas (11) einem Schritt zur Reinigung (iii) von den unerwünschten Elementen zugeleitet wird,
- das thermolysierte Material (12) einem Schritt der endothermen Vergasung (ii) bei einer Temperatur von über 800 °C zugeleitet wird, der es ermöglicht, ein Vergasungsgas (21) zu erhalten,
- das Vergasungsgas (21) einen Schritt der Enthalpierückgewinnung (v) durchläuft, derart, dass seine Temperatur weniger als 500 °C beträgt,
- über 35 % der Energie, die für den Thermolyseschritt (i) erforderlich ist, vom Enthalpierückgewinnungsschritt (v) geliefert wird.

2. Verfahren nach Anspruch 1, **dadurch gekennzeichnet, dass** das ganze oder ein Teil des gereinigten Thermolysegases (32) den endothermen Vergasungsschritt (ii) durchläuft.

3. Verfahren nach Anspruch 1 oder 2, **dadurch gekennzeichnet, dass** das ganze oder ein Teil des gereinigten Thermolysegases (32) stromaufwärts des Enthalpierückgewinnungsschritts (v) mit dem Vergasungsgas (21) gemischt wird.

4. Verfahren nach Anspruch 3, **dadurch gekennzeichnet, dass** das ganze oder ein Teil des gereinigten Thermolysegases (32) einen Spaltungsschritt durchläuft, und anschließend stromaufwärts des Enthalpierückgewinnungsschritts (v) mit dem Vergasungsgas (21) gemischt wird.

5. Verfahren nach Anspruch 3, **dadurch gekennzeichnet, dass** das ganze oder ein Teil des gereinigten Thermolysegases (32) mit dem Vergasungsgas (21) gemischt wird, und anschließend stromaufwärts des Enthalpierückgewinnungsschritts (v) einen Spaltungsschritt durchläuft.

6. Verfahren nach einem der vorstehenden Ansprüche, **dadurch gekennzeichnet, dass** das ganze oder ein Teil des gereinigten Thermolysegases (32) einen Verbrennungsschritt (iv) durchläuft, der die Energie für den endothermen Vergasungsschritt (ii) liefert.

7. Verfahren nach einem der vorstehenden Ansprüche, **dadurch gekennzeichnet, dass** die Dauer und die Temperatur des Thermolyseschritts (i) so geregelt wird, dass ein Molverhältnis 2S/(Cl+Na+K) im thermolysierten Material (12) von mehr als 4, und noch stärker bevorzugt mehr als 8 erhalten wird.

8. Verfahren nach einem der vorstehenden Ansprüche, **dadurch gekennzeichnet, dass** der Thermolyseschritt (i) in zwei Schritten in Reihe vorgenommen wird, einem ersten Schritt der Thermolyse (i') bei einer Temperatur im Bereich zwischen 250 °C und 350 °C, und einem zweiten Schritt der Thermolyse (i'') bei einer Temperatur im Bereich zwischen 650 °C und 750 °C, und dadurch, dass die Gase, die aus jedem dieser Schritte (i', i'') hervorgehen, getrennt extrahiert werden und einen gemeinsamen oder getrennten Schritt der Reinigung von den unerwünschten Elementen (iii) durchlaufen.

9. Verfahren nach einem der vorstehenden Ansprüche, **dadurch gekennzeichnet, dass** der Reinigungsschritt (iii) einen Schritt der Reinigung von Stäuben nach Mischen mit einem oder mehreren Mitteln zum Absammeln von unerwünschten Elementen umfasst.

10. Verfahren nach einem der vorstehenden Ansprüche, **dadurch gekennzeichnet, dass** der Reinigungsschritt (iii) einen Kondensationsvorgang umfasst.

11. Verfahren nach einem der vorstehenden Ansprüche, **dadurch gekennzeichnet, dass** das gereinigte Thermolysegas (32) ganz oder zum Teil beim Enthalpieaustauschschritt (v) als Haupt- oder zusätzliches Wärmeträgermedium verwendet wird.

12. Verfahren nach einem der vorstehenden Ansprüche, **dadurch gekennzeichnet, dass** feste Einzelteilchen ganz oder zum Teil beim Enthalpieaustauschschritt (v) als Haupt- oder zusätzliches Wärmeträgermedium verwendet werden.

13. Verfahren nach einem der vorstehenden Ansprüche, **dadurch gekennzeichnet, dass** die Menge der Elemente Cl, S, Na und K in den behandelten Materialien und/oder den hergestellten Gasen auf Ebene des Schritts i analysiert wird.

14. Verfahren nach einem der vorstehenden Ansprüche, **dadurch gekennzeichnet, dass** die Menge der als CHO-Elemente bezeichneten Elemente Kohlenstoff, Wasserstoff und Sauerstoff in den behandelten Materialien und den hergestellten Gasen auf Ebene aller oder eines Teils der Schritte (i, ii, iii, iv, v) des Verfahrens analysiert wird.

## Claims

1. Method for producing a synthesis gas (62) from an organic material (10) with a moisture content of less than 20%, comprising a first step for carrying out the thermolysis (i) of said organic material (10) then a second separate step for the gasification (ii) of the thermolysed organic material (12), **characterised in that**:
- the thermolysis step (i) is carried out by increasing the temperature of the raw material (10) up to an end temperature higher than 150°C and lower than 1400°C,
- the thermolysis step (i) is carried out in a controlled gas atmosphere in which the quantity of oxygen supplied is less than 20% of the quantity of oxygen required for the stoichiometric combustion of the raw organic material,
- the thermolysis gas (11) obtained in the thermolysis step (i) is conveyed to a purification step (iii) of the undesirable elements,
- the thermolysed material (12) is conveyed to an endothermic gasification step (ii) carried out at a temperature higher than 800°C whereby a gasification gas (21) is obtained,
- the gasification gas (21) undergoes an enthalpy recovery step (v) such that the temperature thereof is lower than 500°C,
- more than 35% of the energy needed for the thermolysis step (i) is supplied by said enthalpy recovery step (v).

2. Method according to claim 1, **characterised in that** all or a portion of the purified thermolysis gas (32) undergoes the endothermic gasification step (ii).

3. Method according to claim 1 or 2, **characterised in that** all or a portion of the purified thermolysis gas (32) is mixed with the gasification gas (21) upstream of the enthalpy recovery step (v)

4. Method according to claim 3, **characterised in that** all or a portion of said purified thermolysis gas (32), undergoes a cracking step then is mixed with the gasification gas (21) upstream of the enthalpy recovery step (v).

5. Method according to claim 3, **characterised in that** all or a portion of said purified thermolysis gas (32) is mixed with the gasification gas (21) then undergoes a cracking step upstream of the enthalpy recovery step (v).

6. Method according to one of the preceding claims, **characterised in that** all or a portion of the purified thermolysis gas (32) undergoes a step of combustion (iv) which supplies energy to the endothermic gasification step (ii).

7. Method according to one of the preceding claims, **characterised in that** the duration and the temperature of the thermolysis step (i) is regulated in such a way as to obtain a molar ratio 2S/(Cl+Na+K), in the thermolysed material (12), greater than 4 and more preferably greater than 8.

8. Method according to one of the preceding claims, **characterised in that** the thermolysis step (i) is carried out in two steps in series, a first thermolysis step (i') at a temperature between 250°C and 350°C and a second thermolysis step (i'') at a temperature between 650°C and 750°C and **in that** the gases coming from each one of these steps (i', i'') are extracted separately and undergo a joint or separate purification step of the undesirable elements (iii).

9. Method according to one of the preceding claims, **characterised in that** the purification step (iii) comprises a step of purification of dust after mixing with one or several agents for collecting undesirable elements.

10. Method according to one of the preceding claims, **characterised in that** the purification step (iii) comprises an operation of condensation.

11. Method according to one of the preceding claims, **characterised in that** the purified thermolysis gas (32) is used in all or in part as a main or complementary heat transfer medium during the step of enthalpy exchange (v)

12. Method according to one of the preceding claims, **characterised in that** independent solid particles are used in all or in part as a main or complementary heat transfer medium during the step of enthalpy exchange (v)

13. Method according to one of the preceding claims, **characterised in that** the quantity of the elements Cl, S, Na and K in the materials treated and/or the gases produced is analysed in the step i.

14. Method according to one of the preceding claims, **characterised in that** the quantity of the elements Carbon, Hydrogen and Oxygen, referred to as CHO elements, in the materials treated and the gases produced is analysed in all or in part of the steps (i, ii, iii, iv, v) of the method.
